# EUROPEAN PATENT SPECIFICATION

(11) **EP 1 414 258 B1**
(45) Date of publication and mention of the grant of the patent: **27.08.2014**
(21) Application number: 02025567.5
(22) Date of filing: 14.11.2002
(51) Int. Cl.: H04W 4/06, H04W 4/08, H04W 76/00

(54) **Group hunting in a mobile communications system**
Gruppenrufaufbau in einem Mobilkommunikationssystem
Recherche collective dans un système de communications mobiles

(30) Priority: 22.10.2002 DE 10249185
(43) Date of publication of application: 28.04.2004
(73) Proprietor: Telefónica Germany GmbH & Co. OHG, 80992 München (DE)
(72) Inventor: Hemchaoui, Wassef Fouad, Burnham, Buckinghamshire SL1 7 HN (GB); Wilson, Philip, Woodbridge, Suffolk IP12 4NR (GB)
(74) Representative: Herrmann, Uwe

(56) References cited:
- EP-A- 0 711 090
- EP-A- 0 858 233
- WO-A-98/00987
- WO-A1-02/49298
- DE-A1- 19 814 162
- DE-C- 4 427 043

## Description

The present invention relates to a communications system having a plurality of mobile terminal stations operable in a telecommunications network. The invention further relates to a method of operating a communications system having a plurality of mobile terminal stations which are operable in a telecommunications network.

Mobile terminal stations operable in telecommunications networks usually have an identification module SIM with an associated identification number IMSI. The IMSI is unambiguously associated with the identification module and thus identifies the terminal station in which the module is installed. Already known telecommunications networks furthermore have home location registers HLR which contain the important data of a mobile subscriber, in particular the IMSI and the associated call number MSISDN of the corresponding terminal station. These numbers are associated with one another. Furthermore, the home location register HLR has data with respect to the current location, i.e. generally the visitor location register VLR, of the mobile terminal station which are linked to the IMSI.

With an incoming call for a mobile terminal station, with already known telecommunications networks an enquiry of the HLR is first carried out which includes an allocation of the selected individual call numbers of the terminal station to the corresponding IMSI and thus also to the current location of the terminal station. The incoming call can in this manner be forwarded to the mobile switching centre MSC of the VLR in whose area the mobile terminal station is located.

To satisfy the desire of being able to allocate a plurality of mobile terminal stations to one call number, a communications system is proposed in EP 0 669 774 B1 in which subscribers are provided with two or more identical identification modules with identical IMSIs and identical associated call numbers; however, this is unwanted particularly under security aspects.

Whereas with already known telecommunications networks an unambiguous allocation of individual call numbers to corresponding IMSIs of the terminal stations is present, solutions are furthermore known by means of which an incoming call can be associated with different IMSIs and thus also with different mobile terminal stations. The advantage can also be achieved with such solutions that different mobile radio devices can be reached under one uniform call number. A communications system is known from DE 43 17 143 C2 by means of which a subscriber can operate two or more mobile terminal stations with different identification modules SIM and can thereby be reached under a uniform call number. For this purpose, data records are present in the HLR which are each associated with a mobile terminal station. The respective IMSI is linked in the data records with one or more individual call numbers MSISDN of the terminal stations. The data records characterising the respective terminal stations are linked with one another in the HLR and have status information of the terminal station which signals whether the terminal station is switched to active or passive. If the call number of a passive terminal station is dialled, this call number is replaced in the HLR by the call number of the active mobile terminal station which is then linked with the corresponding IMSI of this device. The call is accordingly forwarded to the active mobile terminal station.

A disadvantage of this solution consists of the fact that extensive interventions have to be made in the HLR to make this service available. It is furthermore necessary for the terminal stations to be registered in one and the same HLR.

Document DE 44 27 043 C1 refers to a method for interconnecting a call to a mobile subscriber of a cellular digital mobile network. It is suggested to allocate a group calling number to a defined group of mobile subscribers by implementing virtual subscribers at the home location register of the mobile network.

Document WO 98/00987 discloses a system and a method for translating special dialling strings and mobile feature codes in a wireless telecommunication network. Upon receipt of a special dialling string or mobile feature code a mobile switching center passes said string and code through a centralized processing center which includes a home location register containing a special dialling string look up table and a mobile feature code look up table.

WO 02/49289 A1 discloses a circuit switch cellular network for internet calling connecting a mobile terminal to a mobile cellular network (GSM) or as an alternative to another wireless location area network (WLAN or Bluetooth). When a connection request to the mobile device is received at the home location register the HLR forwards the incoming request to a service control point SCP which decides whether the connection should be established over the GSM network or over the WLAN or Bluetooth network. The SCP takes full control over the call, that is to say the SCP provides all necessary information for connection establishment.

It is the underlying object of the present invention to further develop the communications system first named such that such modifications and restrictions are not absolutely necessary.

This object is solved by a communications system having the features of claim 1 and a method according to the features of claim 12.

According to claim 1, one or more association means are present which include an association of data characterising an incoming call to a group of data characterising terminal stations. Furthermore, means are present by which the characterising data of at least one terminal station can be forwarded to an HLR of the communications system. The forwarding of incoming calls of various kinds (e.g. voice, data or SMS) can thereby be influenced. The HLR contains the data characterising the terminal stations, preferably the identification numbers of the terminal stations and the associated individual call numbers.

It can generally be provided that all data of a group are forwarded or also only the data of some or of a single terminal station. The data of a plurality of terminal stations can be forwarded to the HLR simultaneously or successively. The selection of the data to be forwarded of the group of data characterising the terminal stations can take place according to any criteria, for example on the basis of a corresponding selection of the subscriber.

The present invention relates to any communications systems and communications standards such as the conventional GSM standard, GPRS or EDGE or also UMTS as well as future standards and systems.

The communications system in accordance with the invention provides for data to be present in the associating means, which can be made for example as a file, which characterise an incoming call and for groups of data to be present which characterise the associated terminal stations. It is possible in this manner to associate an incoming call with the data of at least one terminal station. These data are then forwarded to an HLR of the communications system from where, in a preferred aspect of the invention, the transferring of the incoming call to the MSC of the VLR can take place. In this manner, a call number of a mobile subscriber can be associated with a group of terminal stations of this subscriber, with modifications in the HLR not necessarily being required since it is possible to supply the HLR with the same data which are also supplied to the HLR in accordance with the prior art to allow a forwarding of the incoming call.

The term "incoming call" used in this invention is to be understood as any incoming request or incoming routeing request, so as for example calls for the purpose of setting up a call, location requests other requests, SMS etc.

According to the invention the data characterising an incoming call is a call number of a mobile subscriber. This call number is associated with the group of data characterising terminal stations of the subscriber in accordance with the invention. The mobile subscriber or his call partner do not have to know the data characterising the terminal stations since it is sufficient for a call to be made under the said call number of the mobile subscriber.

A call is generally understood as any kind of message, for example a call for the purpose of setting up a call, voice messages or also text messages, location or data (CS and GPRS) requests such as PDP context requests.

In a further aspect of the invention, provision is made for the data characterising the terminal stations to be individual call numbers of the terminal stations. With this embodiment of the invention, the individual call numbers of the terminal stations are associated with the data characterising an incoming call. After a corresponding selection, an individual call number of an terminal station is forwarded to the associated HLR as is also known from the prior art, so that in this case a modification of the HLR is not necessary.

The HLR can have an association of the individual call number of the terminal station with the identification number stored in an identification module of the terminal stations and thus with the VLR in whose area the terminal station is located. After the transfer of the data characterising the terminal station to the HLR, an association can take place in this with the identification number of the terminal station and, furthermore, an association of this number with the VLR so that the incoming call can be forwarded accordingly. The VLR generally has data which allow an exact localisation of the terminal station in a location area LA.

The data characterising the terminal stations can also be the IMSI of the SIM card of the terminal station.

The association means can include a table which contains the call number of a mobile subscriber and individual call numbers of the terminal stations associated with this call number.

Furthermore, a table can be provided which includes the association of the individual call numbers with identification numbers of the terminal stations. In this manner, an unambiguous association of the MSISDN of the terminal stations with the IMSI of the SIM modules present in the terminal stations is possible.

Provision can furthermore be made for the association means to have priorities according to which the data of the terminal stations can be selected, with the data of terminal stations of lower priority being able to be selected when terminal stations with data of higher priority are not available. In this manner, the mobile subscriber can determine the order in which the mobile end users used by him should be selected if an incoming call is received. If, for example, the mobile phone has priority 1, the car phone priority 2 and a PDA priority 3, when a call is incoming, the data record characterising the mobile phone is first selected using the association means and forwarded to the HLR. If the call is not accepted here because the device is switched off, this is reported back and the selection of the data record characterising the car phone takes place, etc. It is preferred that the reporting back is not done in the signalling, the SCP will automatically fall back to the second priority device and continue routing the request for the second priority device.

As an alternative to this, it is also conceivable for no prioritisation to take place, but for the call to remain unsuccessful if, for example, the mobile terminal station listed at first position of the association means are not available. In this case, no attempt is made to reach the further mobile terminal stations. It is however preferred that the call will continue routing so that voicemail or other call forwarding still take place.

It is likewise possible for all terminal stations of the group of terminal stations to ring (simultaneous ringing) when a call is incoming.

The present invention allows the association of data characterising an incoming call with a group of data characterising terminal stations. The data of one, more or also all terminal stations of the said group can be selectable and forwarded to the HLR.

Provision can furthermore be made for another number, for example a mailbox to be able to be activated if one or more mobile terminal stations are not available.

This other number can generally be prioritised like a mobile terminal station and then also taken into consideration accordingly in the association means or in the table stored therein.

Provision is made in a further aspect of the present invention for the association means to be made as a file or to include a file.

It can generally be stated that the association means can include data ranges for different types of call, i.e. for example for voice, data, voice messages or text messages, with provision being able to be made, for example, for an SMS always to be sent to a specified mobile terminal station while other mobile terminal stations are precluded therefrom. Prioritisations and any other settings are also conceivable among the mobile terminal stations capable of SMS. Also location requests and MMS (Photo messaging devices) in this case can be used for priorisation as further examples.

Provision can furthermore be made for the data stored in the association means to be modifiable by a mobile subscriber in particular via the Internet or USSD. Other methods as SMS, WAP and IVR can also be used. In this manner, the mobile subscriber can modify the order or the kind of mobile terminal stations, a prioritisation, etc.

In accordance with a preferred aspect of the present invention, the communications system has at least one VLR or MSC or SGSN with means being provided by which, on a location update LU to the VLR, the call number MSISDN of a mobile subscriber can be transferred, among other things. A location update is carried out when the mobile terminal station moves from the area of one VLR into another on the same VLR or into that of another VLR. In the case where the mobile terminal station moves from the area of another VLR, an enquiry of the HLR quoting the IMSI is started via the MSC in already known communications systems, with the HLR undergoing an update in that the address of the new VLR is stored in the HLR. The HLR thereupon transmits the relevant data to the new VLR. Provision is made in accordance with the invention for the call number of the mobile subscriber also to be transferred in addition to the data transferred to the VLR or MSC or SGSN. This has the advantage that with outgoing calls it is not the individual call numbers of the terminal stations which appear externally and are forwarded, but the call number of the mobile subscriber. In this manner, the individual call numbers of the terminal stations can remain completely hidden for third parties. What is outlined above with respect to VLR also applies for MSC or SGSN. VLR therefore stands also for MSC or SGSN.

Instead of the VLR, any other devices are also conceivable to which the call number of the mobile subscriber is transferred and which ensure that on an outgoing call the call number of the mobile subscriber appears and not the individual call number of the terminal station used. Or in the case of call forwarding the diverting identity is that of the call number and not the individual number. Also in the case of outgoing CAMEL requests the call number and not the individual number appears. As well for outgoing, call forwarded CAMEL requests it is the call number and not the individual number is presented to other systems.

The aforesaid transfer to the MSC or VLR is only one possibility of realisation. With GPRS or UMTS systems, a transfer of the call number of the mobile subscriber to the SGSN takes place.

The said means can be a component of the association means. In this case, the location update takes place via the association means.

In a further aspect of the present invention, distinguishing means are provided by means of which the data characterising an incoming call are only forwarded to the association means when a group of data characterising terminal stations is associated therewith. Otherwise, the association means are not activated with this embodiment and the HLR can be addressed in a customary manner to receive the data required for the forwarding of the call.

The present invention further relates to a method of operating a communications system having a plurality of mobile terminal stations which are operable in a telecommunications network and which each have an identification module with an associated identification number, having an HLR which includes the data characterising the terminal stations, in particular the identifications numbers and the associated individual call numbers of the terminal stations, and having one or more association means which include an association of data characterising an incoming call with a group of data characterising terminal stations. The method in accordance with the invention is characterised in that the data of at least one terminal station are forwarded to an HLR of the communications system on the basis of the data characterising an incoming call.

The data characterising an incoming call is the call number of a mobile subscriber. The data characterising the terminal stations can be the individual call numbers of the terminal stations or the IMSI of the SIM card located in the mobile terminal station.

Provision is made in a further aspect of the present invention for the data characterising an incoming call only to be forwarded to the association means when these data are associated with a group of data characterising terminal stations. If this is not the case and if the data characterising an incoming call are only associated with one terminal station, access to the association means can be dispensed with.

Provision is made in a preferred aspect of the invention for data to be transferred to the VLR in a location update which include the call number of the mobile subscriber. It can be ensured in this manner that the individual call numbers of the terminal stations remain hidden for third parties since now the call number of the mobile subscriber is present in the VLR.

Generally, the HLR may hold more than one individual MSISDN (which can be the same) such as DUAL MSISDN subscriptions for a device and the SCP may interact with or process one or all during a location update or call activity.

Further, a GPRS PDP context activation call flow may be useful showing the RADIUS authentication with the caller MSISDN.

A CAMEL originating call flow example showing the caller MSISDN maybe also useful to cover CAMEL in general.

Further details and advantages of the present invention will be explained in more detail with reference to an embodiment represented in the drawing. There are shown:
- Fig. 1: a schematic representation of the communications system in accordance with the invention;
- Fig. 2: a schematic representation of the forwarding of a call outgoing from the communications system;
- Fig. 3: a schematic representation of the forwarding of a call incoming into the communications system;
- Fig. 4: a representation of a table of an association means;
- Fig. 5: a representation of the procedure of the location update;
- Fig. 6: a representation of the forwarding of an incoming call with selection of an individual call number;
- Fig. 7: a representation of the forwarding of an incoming call with selection of a plurality of individual call numbers ranked according to priority;
- Fig. 8: a representation of the forwarding of an incoming SMS;
- Fig. 9: a representation of the procedure of the location update in a GPRS system.

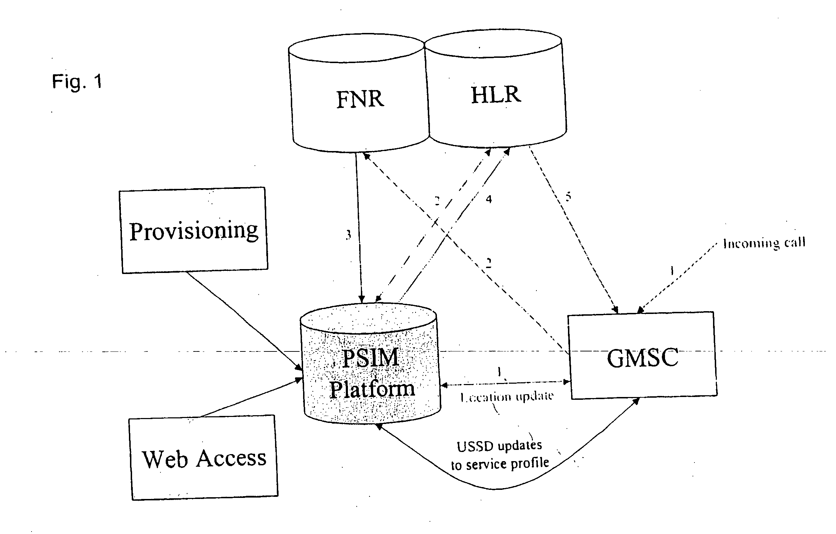

Figure 1 shows the gateway mobile switching centre GMSC in which the call marked by 1 is incoming. The GMSC thereupon makes contact with the flexible number register FNR (arrow 2) which, on the basis of the call number of the incoming call, recognises that it is a call number with which a plurality of individual call numbers are associated. Other platforms working in an equivalent manner can also be used instead of the said FNR. Irrespective of the specific name, it is the task of such a platform to forward the incoming calls to the correct HLR for the corresponding IMSI or MSISDN. The MSISDNs or IMSIs can be distributed over a plurality of HLRs. In the present case, the FNR, or a platform operating in an equivalent manner, recognises that the MSISDN of the incoming call belongs to a multi-card application and forwards the call to the multi-card platform. Under this aspect, the multi-card platform is selected as a specific HLR by the FNR. The selection of the multi-card platform (PSIM platform) by the FNR is shown by arrow 3 in the Figure. The call numbers of the mobile subscriber and individual call numbers of the associated terminal stations associated therewith are stored therein. Depending on the selection made in the multi-card platform or on the priorities set, at least one individual call number is forwarded to the HLR (arrow 4). Here, the association of the individual call number with a corresponding IMSI and thus also with the VLR takes place so that corresponding information can be forwarded from the HLR to the GMSC (arrow 5). Now, a connection can be made accordingly from the GMSC to the MSC of the VLR in whose zone the mobile terminal station is located.

The multi-card platform (PSIM platform) can, for example, be accessed via the Internet to make corresponding data modifications here or to view the data of the association means. Furthermore, the update of the multi-card platform (PSIM platform) is possible by means of USSD so that the user can carry out modifications of the association means, i.e. of a table stored therein for example, via the pressing of keys of his mobile phone, for example. It is also possible for the mobile subscriber to obtain information on the ongoing status of the association means, for example on which mobile terminal station is selected when an incoming call takes place.

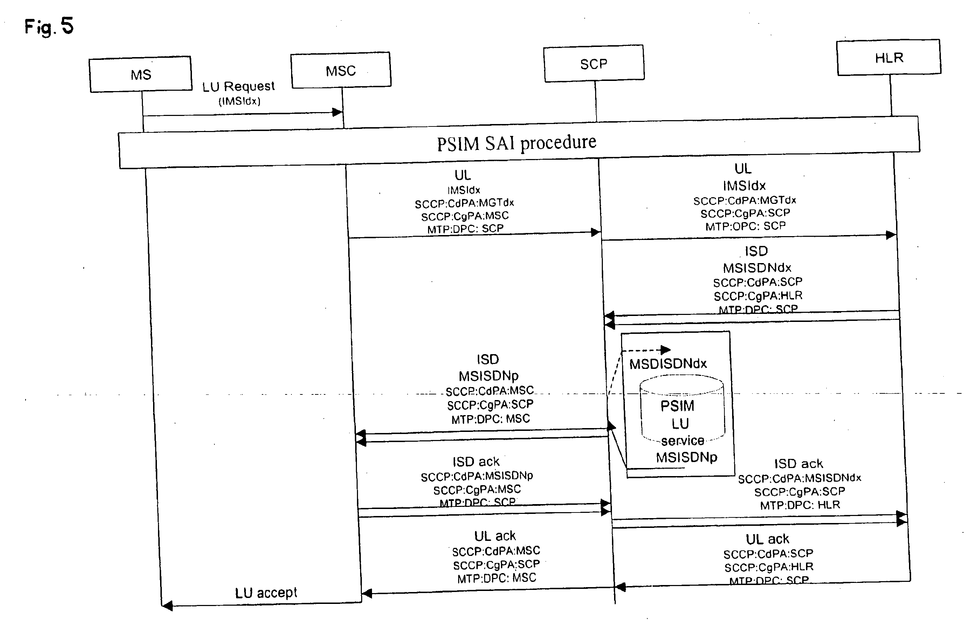

Fig. 1 furthermore shows the procedure of the location update which results in detail from Fig. 5. If a mobile terminal station moves from the area of one VLR into the area of another VLR, an update takes place via the MSC which is carried out, in accordance with the prior art, directly by the HLR. The GMSC is not used in its gateway function during the location update, which is why an MSC is spoken of here instead of a GMSC. In accordance with Fig. 1, the location update takes place, however, via the multi-card platform (PSIM platform), whereby it becomes possible for the update data, which are forwarded to the MSC of the corresponding VLR, also to detect the call number of a mobile subscriber in order to ensure in this manner that always only this number is also displayed with outgoing calls. Third parties are therefore not aware of the individual call numbers of the terminal stations.

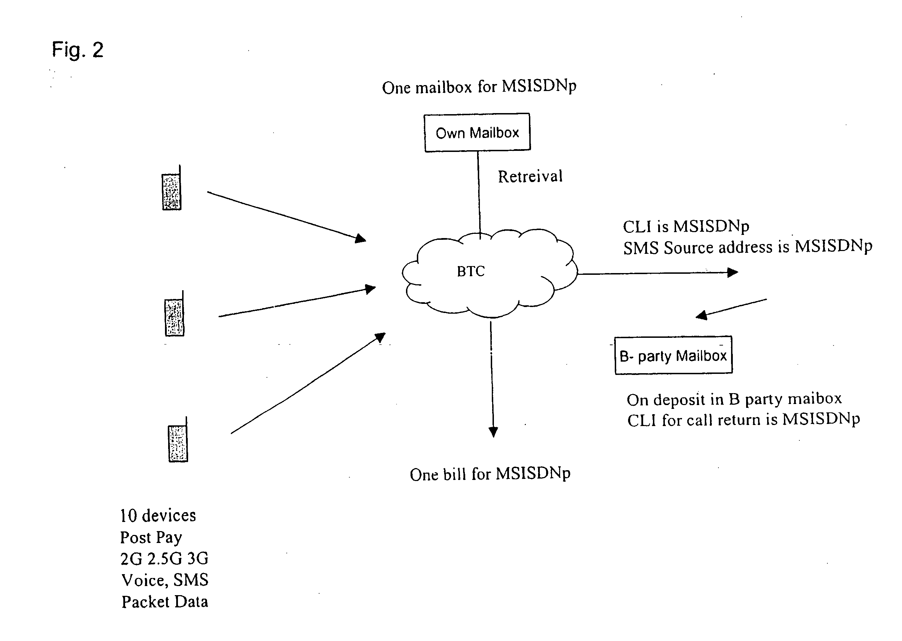

Fig. 2 shows, in a simplified representation, an outgoing call from the mobile terminal stations into the network BTC. A transformation takes place here of the individual call numbers of the mobile terminal stations into the call number of a mobile subscriber MSISDNp with which a mailbox is associated and for which the mobile subscriber receives a uniform invoice. It can furthermore be seen from Fig. 2 that only the call number of the mobile subscriber MSISDNp is visible to third parties (CLI). SMS are also sent to this call number since advantageously individual call numbers are not known to third parties.

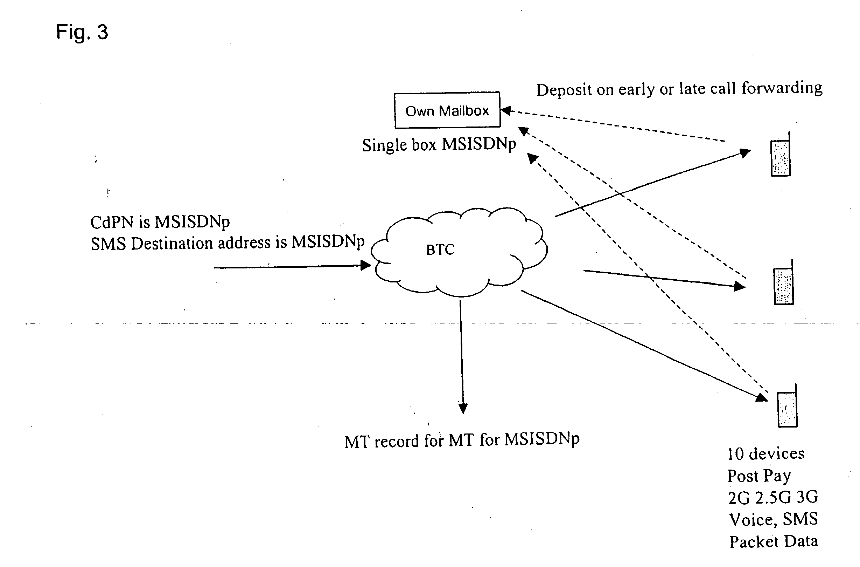

Fig. 3 shows the schematic representation of a call incoming into the communications system in accordance with the invention with the call number MSISDNp. The incoming call can be a voice message or, for example, also an SMS which are both sent to the call number MSISDNp. This is associated via the association means with data of the mobile terminal stations. A data record is selected therefrom and the mobile terminal station is addressed accordingly. If no availability is present here, provision can be made for a common mailbox to be provided in which messages can be stored if none of the mobile terminal stations is available.

Provision can generally be made for call forwarding to be provided for all mobile terminal station or only for some of these or for different call forwarding options, mailboxes, etc. to be provided depending on the terminal station.

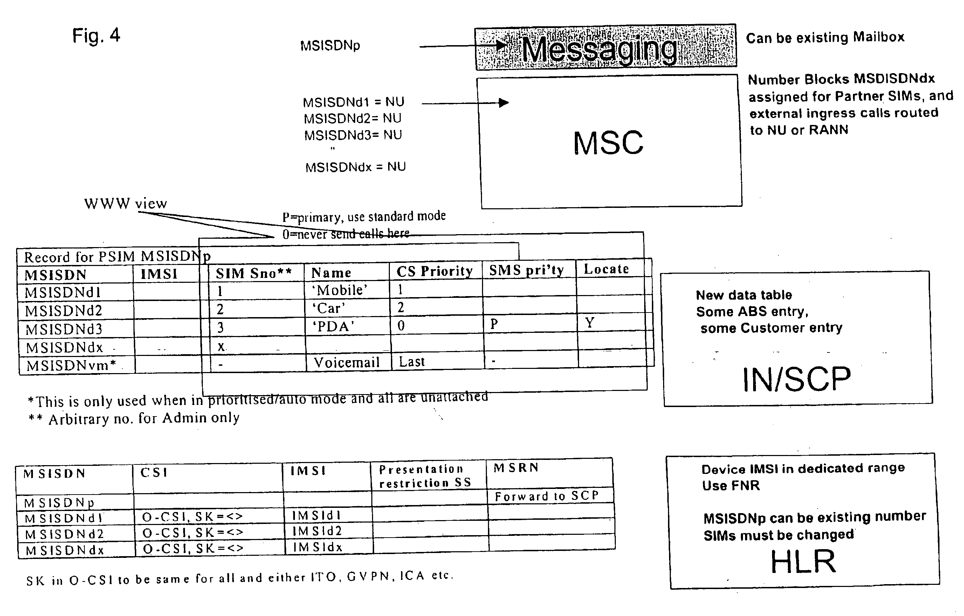

Fig. 4 shows a table stored in the association means which can be viewed and also changed by the mobile subscriber via the Internet, for example. For the multi-card functionality in accordance with the invention, the standardised IN/SCP platform in accordance with Fig. 4 is used which has been modified for the device in accordance with the invention or for the method in accordance with the invention. This modified platform corresponds to the PSIM platform shown in the further Figures. The table contains the call numbers MSISDNp of a mobile subscriber and individual call numbers MSISDNd1 to MSISDNx associated with this number as well as the MSISDNvm for the mailbox. The table furthermore contains corresponding names of the mobile terminal stations and priorities for voice messages. In the present example, the mobile phone has been set with priority 1 so that calls are first always. forwarded to the mobile phone. The car phone has priority 2 and the PDA priority 0 so that no voice messages are received here. Differing from this, priorities and settings are provided for text messages. In the present case, text messages should only be sent to the PDA. Furthermore, the MSISDNvm is provided which relates to the mailbox which has the lowest priority and which is accessed when none of the aforesaid devices is available for voice messages or is answered. Provision can be made for only part of the table, the grey shaded part in accordance with Fig. 4, to be viewable and changeable via the Internet. The device selected for use with location based services is also able to be selected as shown.

Fig. 5 shows the location update which is requested by the mobile terminal station MS (LU request). This is sent to the MSC of the corresponding VLR while quoting the corresponding IMSI (IMSIdx), said MSC controlling the association means SCP, i.e. the multi-card platform (PSIM platform) via the IMSI. Said multi-card platform (PSIM platform) forwards the IMSIdx to the HLR which includes an association with the individual call numbers MSISDNdx of the mobile terminal stations. The HLR transfers the corresponding individual call number MSISDNdx to the SCP whereupon the emission of the call number MSISDNp of the mobile subscriber takes place. This is sent to the MSC and is available here. Outgoing calls can always be displayed under the call number MSISDNp in this manner.

Fig. 4 shows the association of the individual MSISDNdx with the corresponding IMSIs of the associated mobile terminal stations in table form. Which individual call number MSISDNd1, MSISDNd2 or generally MSISDNdx is associated with which IMSI and thus with which SIM card results from this.

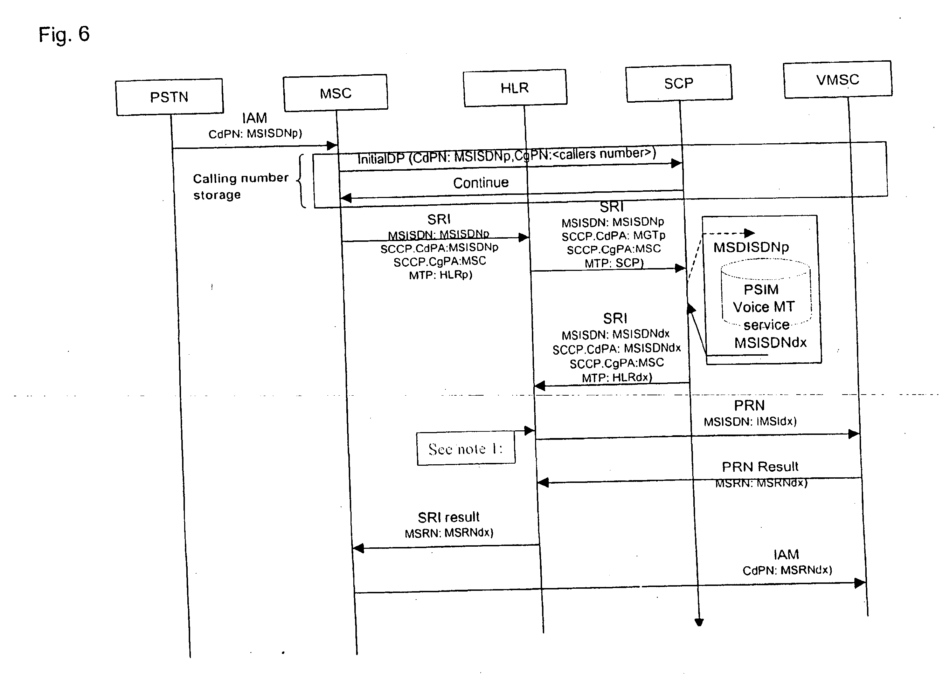

Fig. 6 shows an incoming call IAM which is forwarded from a network PSTN to an MSC. A request is made from here via the known (selected) MSISDNp to the HLR which selects the multi-card platform (PSIM platform) SCP accordingly. The selection of an individual call number MSISDNdx, which is transferred to the HLR, takes place here. On the basis of the corresponding associated data stored in the HLR, the associated MSC of the VLR (VMSC) is now selected and then a connection established between the MSC and the VMSC so that the call can be forwarded accordingly for the purpose of setting up the call.

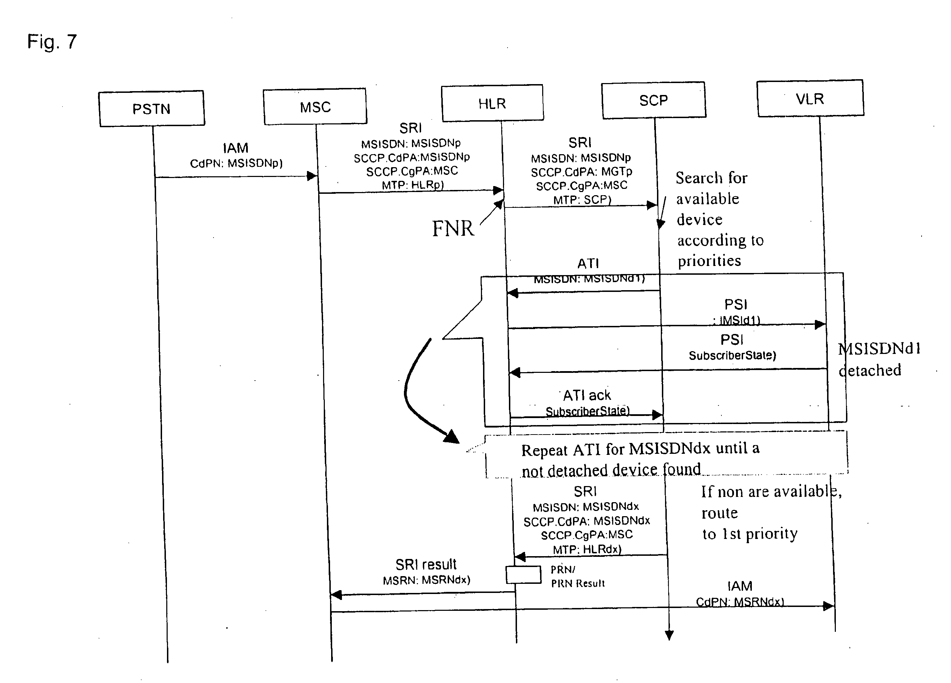

Fig. 7 also shows the processing of an incoming call, with priorities being stored in the association means SCP. An attempt is first made to reach the device with the MSISDNd1, for which purpose a corresponding request is directed to the associated VLR. If no positive feedback is made here, the procedure is repeated with the next terminal station whose priority is lower. A switching through of the call then takes place for the mobile terminal station for which the VLR has emitted a positive feedback, i.e. which is available.

If no terminal station is available, provision can be made for the call to be forwarded to the device with the first priority and then, for example, for its mailbox to be activated.

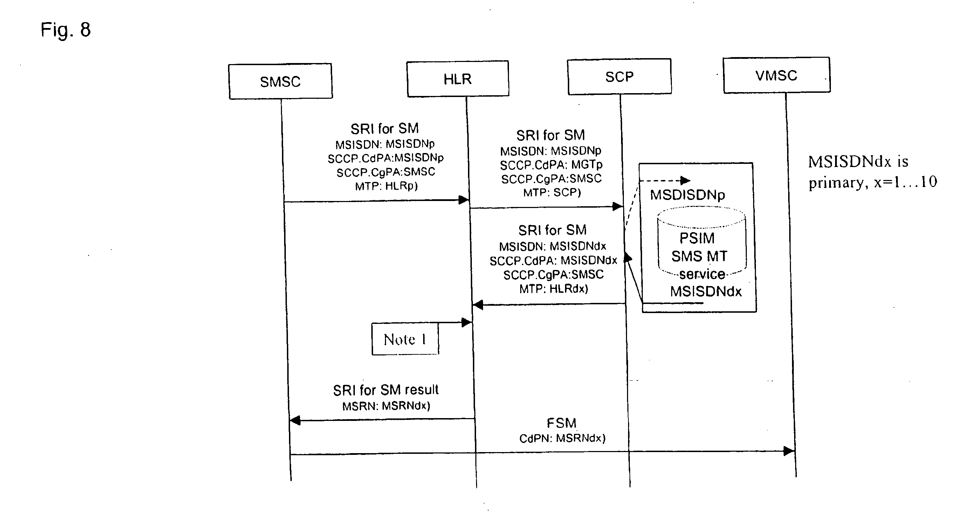

Fig. 8 shows the processing of an incoming SMS which is likewise sent from the switching centre SMSC to the HLR under the call number MSISDNp of the subscriber. The HLR selects the multi-card platform (PSIM platform) SCP in which the individual call number MSISDNdx is selected and sent accordingly to the HLR. On the basis of this information, the SMS can be sent from the SMSC to the corresponding associated VLR, i.e. to the VMSC in whose zone the mobile terminal station is located.

The present invention has the advantage that extensive modifications to the HLR are not absolutely necessary since the HLR can have data made available to it in a preferred aspect of the invention which do not differ from those which are supplied to the HLR according to the prior art. The present invention makes it possible to make available a uniform call number of a mobile subscriber which can be linked to a plurality of individual call numbers of the terminal stations without the latter having to be known to the mobile subscriber or to third parties. The data of the terminal stations belonging to the group can, but do not all have to, be registered in the same HLR.

The communications system in accordance with the invention allows the individual selection of the mobile terminal stations, with any variation options also being possible with respect to the kind of call, for example a voice message or SMS.

The present invention relates to any mobile radio technologies or systems such as GPRS or also UMTS.

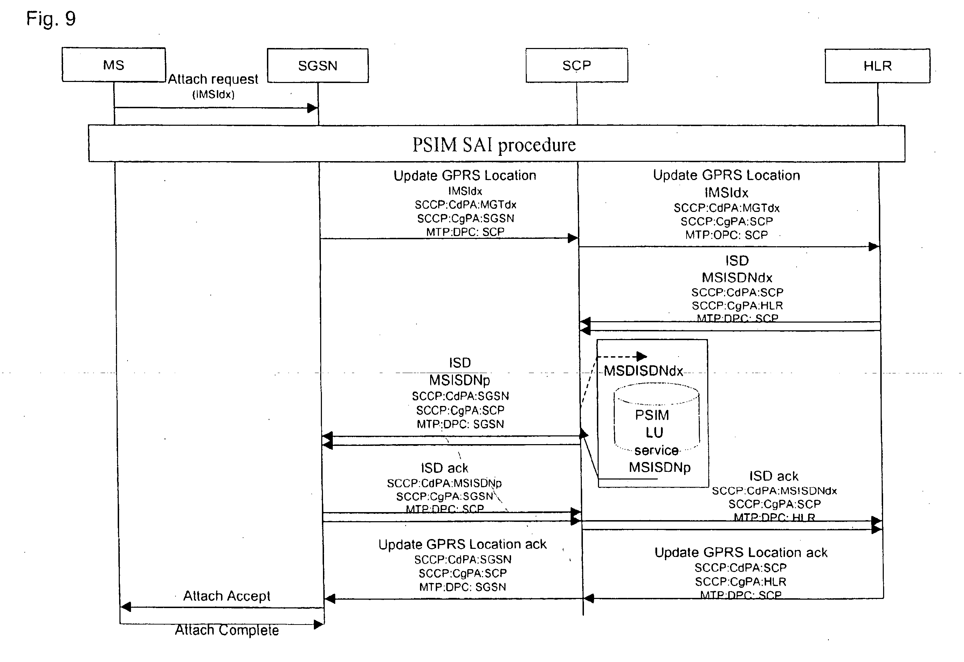

Fig. 9 shows the procedures taking place on a location update of a GPRS system. While quoting the IMSI (IMSIdx) of the mobile terminal station, the attach request is first sent to the support node SGSN. From here, the location update command is sent to the multi-card platform SCP while quoting the IMSIdx and from here further on to the HLR. The HLR, which has an association of the IMSIdx with the individual call numbers MSISDNdx at is disposal, forwards the individual call numbers MSISDNdx to the multi-card platform SCP, whereupon the emission of the call number MSISDNp to the support node SGSN takes place there. After corresponding confirmation messages, the update is terminated. The call number MSISDNp of the subscriber is now available in the SGSN and can be used for data transfer purposes.

It is generally possible to operate the present invention simultaneously for mobile terminal stations operating according to the conventional GSM standard and for mobile terminal stations operating according to any other standards or systems, for example GPRS or UMTS.

The term "home location register" used should include any registers, e.g. in the UMTS standard or further standards, which include data specific to terminal stations and which are supplied with data from the one or more association means.

The present invention is not restricted to all terminal stations being located in one and the same communications system. The terminal stations can equally be located in part or in their totality in communication networks of third-party providers (roaming). The present invention is thus not restricted to the use of only one communications system, but can equally utilise components or information of other communications systems as is for example the case in the case of roaming.

## Claims

1. A communications system having a plurality of mobile terminal stations which are operable in a telecommunications network and which each have an identification module with an associated identification number, having at least one home location register which includes data characterising the mobile terminal stations, preferably the identification numbers and the associated individual call numbers of the mobile terminal stations, having one or more association means which include an association of data characterising an incoming call representing the call number of a mobile subscriber with a group of data characterising mobile terminal stations of this subscriber, and which is adapted to select and to forward the characterising data of at least one mobile terminal station of the group of data characterising the mobile terminal stations to a home location register of the communication system on the basis of the data characterising an incoming call.

2. A communications system in accordance with claim 1, wherein the data characterising the mobile terminal stations are individual call numbers of the mobile terminal stations.

3. A communications system in accordance with any of the preceding claims, wherein the data characterising the mobile terminal stations represent the identification number of the identification module of the mobile terminal station.

4. A communications system in accordance with any of the preceding claims, wherein the association means includes a table which includes the call number of a mobile subscriber and individual call numbers of the mobile terminal stations associated with this call number.

5. A communications system in accordance with any of the preceding claims, wherein a table is provided which includes the association of the individual call numbers with identification numbers of the identification modules of the mobile terminal stations.

6. A communications system in accordance with any of the preceding claims, wherein the association means has priorities according to which the characterising data of the mobile terminal stations are selected, with the characterising data of mobile terminal stations of lower priority being able to be selected when mobile terminal stations with characterising data of higher priority are not available.

7. A communications system in accordance with any of the preceding claims, wherein the association means is made as a file or comprises a file.

8. A communications system in accordance with any of the preceding claims, wherein data stored in the association means can be modified by a mobile subscriber in particular via the Internet or USSD or SMS or WAP or IVR.

9. A communications system in accordance with any of the preceding claims, wherein the communications system has at least one visitor location register or MSC or SGSN and wherein means are provided by which, on a location update, among other things the call number of a mobile subscriber can be transferred to the visitor location register, MSC or SGSN.

10. A communications system in accordance with claim 9, wherein the means are a component of the association means.

11. A communications system in accordance with any of the preceding claims, wherein distinguishing means are provided via which the data characterising an incoming call are only forwarded to the association means when a group of data characterising mobile terminal stations are associated therewith.

12. A method of operating a communications system having a plurality of mobile terminal stations which are operable in a telecommunications network and which each have an identification module with an associated identification number, having at least one home location register which includes data characterising the mobile terminal stations, preferably the identification numbers and the associated individual call numbers of the mobile terminal stations, having one or more association means which include an association of data characterising an incoming call representing the call number of a mobile subscriber with a group of data characterising mobile terminal stations of the mobile subscriber, in which, on the basis of the data characterising an incoming call, the characterising data of at least one mobile terminal station of the group of data characterising the mobile terminal stations is/are selected and forwarded to a home location register of the communications system.

13. A method in accordance with claim 12, wherein the data characterising the mobile terminal stations are the individual call numbers of the mobile terminal stations.

14. A method in accordance with any of the preceding claims 12 or 13, wherein the data characterising the mobile terminal stations represent the identification number of the identification module of the mobile terminal station.

15. A method in accordance with any of the preceding claims 12 to 14, wherein the data characterising an incoming call are only forwarded to the association means if these data are associated with a group of data characterising mobile terminal stations.

16. A method in accordance with any of the preceding claims 12 to 15, wherein, in a location update, data are transferred to a visitor location register which include the call number of the mobile subscriber.

## Patentansprüche

1. Kommunikationssystem mit mehreren mobilen Endstellen, die in einem Telekommunikationsnetz betreibbar sind und die jeweils ein Identifizierungsmodul mit einer zugeordneten Identifizierungsnummer aufweisen, mit mindestens einem Heimatortsregister, das die mobilen Endstellen charakterisierende Daten, vorzugsweise die Identifizierungsnummern und die zugeordneten einzelnen Rufnummern der mobilen Endstellen umfasst, mit einem oder mehreren Zuordnungsmitteln, die eine Zuordnung von einen eingehenden Ruf charakterisierenden Daten, die die Rufnummer eines Mobilfunkteilnehmers darstellen, zu einer Gruppe von mobile Endstellen dieses Teilnehmers charakterisierenden Daten umfassen, und das ausgelegt ist, um die charakterisierenden Daten mindestens einer mobilen Endstelle der Gruppe von Daten, die die mobilen Endstellen charakterisieren, auf der Grundlage der einen eingehenden Ruf charakterisierenden Daten zu wählen und zu einem Heimatortsregister des Kommunikationssystems weiterzuleiten.

2. Kommunikationssystem nach Anspruch 1, wobei die die mobilen Endstellen charakterisierenden Daten einzelnen Rufnummern der mobilen Endstellen sind.

3. Kommunikationssystem nach einem der vorhergehenden Ansprüche, wobei die die mobilen Endstellen charakterisierenden Daten die Identifizierungsnummer des Identifizierungsmoduls der mobilen Endstelle darstellen.

4. Kommunikationssystem nach einem der vorhergehenden Ansprüche, wobei das Zuordnungsmittel eine Tabelle umfasst, die die Rufnummer eines Mobilfunkteilnehmers und einzelne Rufnummern der mobilen Endstellen, die dieser Rufnummer zugeordnet sind, umfasst.

5. Kommunikationssystem nach einem der vorhergehenden Ansprüche, wobei eine Tabelle vorgesehen ist, die die Zuordnung der einzelnen Rufnummern zu Identifizierungsnummern der Identifizierungsmodule der mobilen Endstellen umfasst.

6. Kommunikationssystem nach einem der vorhergehenden Ansprüche, wobei das Zuordnungsmittel Prioritäten hat, gemäß denen die charakterisierenden Daten der mobilen Endstellen gewählt werden, wobei die charakterisierenden Daten von mobilen Endstellen niedrigerer Priorität gewählt werden können, wenn mobile Endstellen mit charakterisierenden Daten höherer Priorität nicht verfügbar sind.

7. Kommunikationssystem nach einem der vorhergehenden Ansprüche, wobei das Zuordnungsmittel als Datei ausgebildet ist oder eine Datei umfasst.

8. Kommunikationssystem nach einem der vorhergehenden Ansprüche, wobei in dem Zuordnungsmittel gespeicherte Daten durch einen Mobilfunkteilnehmer insbesondere über das Internet oder USSD oder SMS oder WAP oder IVR modifiziert werden können.

9. Kommunikationssystem nach einem der vorhergehenden Ansprüche, wobei das Kommunikationssystem mindestens ein Besucherortsregister oder MSC oder SGSN aufweist und wobei Mittel vorgesehen sind, durch die bei einer Ortsaktualisierung unter anderem die Rufnummer eines Mobilfunkteilnehmers zu dem Besucherortsregister, MSC oder SGSN übertragen werden kann.

10. Kommunikationssystem nach Anspruch 9, wobei die Mittel eine Komponente des Zuordnungsmittels sind.

11. Kommunikationssystem nach einem der vorhergehenden Ansprüche, wobei Unterscheidungsmittel vorgesehen sind, mittels welcher die einen eingehenden Ruf charakterisierenden Daten nur zu dem Zuordnungsmittel weitergeleitet werden, wenn eine Gruppe von Daten, die mobile Endstellen charakterisieren, diesen zugeordnet sind.

12. Verfahren zum Betreiben eines Kommunikationssystems mit mehreren mobilen Endstellen, die in einem Telekommunikationsnetz betreibbar sind und die jeweils ein Identifizierungsmodul mit einer zugeordneten Identifizierungsnummer aufweisen, mit mindestens einem Heimatortsregister, das die mobilen Endstellen charakterisierende Daten, vorzugsweise die Identifizierungsnummern und die zugeordneten einzelnen Rufnummern der mobilen Endstellen umfasst, mit einem oder mehreren Zuordnungsmitteln, die eine Zuordnung von einen eingehenden Ruf charakterisierenden Daten, die die Rufnummer eines Mobilfunkteilnehmers darstellen, zu einer Gruppe von Daten, die mobile Endstellen des Mobilfunkteilnehmers charakterisieren, umfassen, wobei auf der Grundlage der einen eingehenden Ruf charakterisierenden Daten die charakterisierenden Daten mindestens einer mobilen Endstelle der Gruppe von Daten, die die mobilen Endstellen charakterisieren, gewählt werden und zu einem Heimatortsregister des Kommunikationssystems weitergeleitet werden.

13. Verfahren nach Anspruch 12, wobei die die mobilen Endstellen charakterisierenden Daten die einzelnen Rufnummern der mobilen Endstellen sind.

14. Verfahren nach einem der vorhergehenden Ansprüche 12 oder 13, wobei die die mobilen Endstellen charakterisierenden Daten die Identifizierungsnummer des Identifizierungsmoduls der mobilen Endstelle darstellen.

15. Verfahren nach einem der vorhergehenden Ansprüche 12 bis 14, wobei die einen eingehenden Ruf charakterisierenden Daten nur zu dem Zuordnungsmittel weitergeleitet werden, wenn diese Daten einer Gruppe von Daten, die mobile Endstellen charakterisieren, zugeordnet sind.

16. Verfahren nach einem der vorhergehenden Ansprüche 12 bis 15, wobei bei einer Ortsaktualisierung Daten zu einem Besucherortsregister übertragen werden, die die Rufnummer des Mobilfunkteilnehmers umfassen.

## Revendications

1. Système de communications comportant une pluralité de stations terminales mobiles qui peuvent être exploitées dans un réseau de télécommunication et qui comportent chacune un module d'identification avec un numéro d'identification associé, comportant au moins un enregistreur de localisation nominal qui comprend des données caractérisant les stations terminales mobiles, de préférence les numéros d'identification et les numéros d'appel individuels associés des stations terminales mobiles, comportant un ou plusieurs moyens d'association qui comprennent une association de données caractérisant un appel entrant représentant le numéro d'appel d'un abonné mobile à un groupe de données caractérisant des stations terminales mobiles de cet abonné, et qui est adapté pour sélectionner et transmettre les données caractérisantes d'au moins une station terminale mobile du groupe de données caractérisant les stations terminales mobiles à un enregistreur de localisation nominal du système de communications sur la base des données caractérisant un appel entrant.

2. Système de communications selon la revendication 1, dans lequel les données caractérisant les stations terminales mobiles sont des numéros d'appel individuels des stations terminales mobiles.

3. Système de communications selon l'une quelconque des revendications précédentes, dans lequel les données caractérisant les stations terminales mobiles représentent le numéro d'identification du module d'identification de la station terminale mobile.

4. Système de communications selon l'une quelconque des revendications précédentes, dans lequel le moyen d'association comprend un tableau qui comprend le numéro d'appel d'un abonné mobile et des numéros d'appel individuels des stations terminales mobiles associées à ce numéro d'appel.

5. Système de communications selon l'une quelconque des revendications précédentes, dans lequel est prévu un tableau qui comprend l'association des numéros d'appel individuels à des numéros d'identification des modules d'identification des stations terminales mobiles.

6. Système de communications selon l'une quelconque des revendications précédentes, dans lequel le moyen d'association comporte des priorités selon lesquelles les données caractérisantes des stations terminales mobiles sont sélectionnées, les données caractérisantes de stations terminales mobiles de priorité plus basse pouvant être sélectionnées quand des stations terminales mobiles avec des données caractérisantes de priorité plus élevée ne sont pas disponibles.

7. Système de communications selon l'une quelconque des revendications précédentes, dans lequel le moyen d'association est réalisé sous forme de fichier ou comprend un fichier.

8. Système de communications selon l'une quelconque des revendications précédentes, dans lequel des données enregistrées dans le moyen d'association peuvent être modifiées par un abonné mobile en particulier via Internet, USSD, SMS, WAP ou SVI.

9. Système de communications selon l'une quelconque des revendications précédentes, dans lequel le système de communications comporte au moins un enregistreur de localisation des visiteurs, MSC ou SGSN, et dans lequel sont prévus des moyens par lesquels, lors d'une mise à jour de localisation, le numéro d'appel d'un abonné mobile entre autres peut être transféré à l'enregistreur de localisation des visiteurs, au MSC ou au SGSN.

10. Système de communications selon la revendication 9, dans lequel les moyens sont un composant des moyens d'association.

11. Système de communications selon l'une quelconque des revendications précédentes, dans lequel des moyens de distinction sont prévus, par lesquels les données caractérisant un appel entrant sont transmises au moyen d'association uniquement quand un groupe de données caractérisant des stations terminales mobiles est associé à celles-ci.

12. Procédé d'exploitation d'un système de communications comportant une pluralité de stations terminales mobiles qui peuvent être exploitées dans un réseau de télécommunication et qui comportent chacune un module d'identification avec un numéro d'identification associé, comportant au moins un enregistreur de localisation nominal qui comprend des données caractérisant les stations terminales mobiles, de préférence les numéros d'identification et les numéros d'appel individuels associés des stations terminales mobiles, comportant un ou plusieurs moyens d'association qui comprennent une association de données caractérisant un appel entrant représentant le numéro d'appel d'un abonné mobile à un groupe de données caractérisant des stations terminales mobiles de l'abonné mobile, dans lequel, sur la base des données caractérisant un appel entrant, les données caractérisantes d'au moins une station terminale mobile du groupe de données caractérisant les stations terminales mobiles sont sélectionnées et transmises à un enregistreur de localisation nominal du système de communications.

13. Procédé selon la revendication 12, dans lequel les données caractérisant les stations terminales mobiles sont les numéros d'appel individuels des stations terminales mobiles.

14. Procédé selon l'une quelconque des revendications précédentes 12 ou 13, dans lequel les données caractérisant les stations terminales mobiles représentent le numéro d'identification du module d'identification de la station terminale mobile.

15. Procédé selon l'une quelconque des revendications précédentes 12 à 14, dans lequel les données caractérisant un appel entrant sont transmises uniquement aux moyens d'association si ces données sont associées à un groupe de données caractérisant des stations terminales mobiles.

16. Procédé selon l'une quelconque des revendications précédentes 12 à 15, dans lequel, dans une mise à jour de localisation, des données sont transférées à un enregistreur de localisation des visiteurs qui comprend le numéro d'appel de l'abonné mobile.
